# EUROPÄISCHE PATENTANMELDUNG

(11) **EP 0 922 949 A1**
(43) Veröffentlichungstag der Anmeldung: **16.06.1999**
(21) Anmeldenummer: 98122827.3
(22) Anmeldetag: 01.12.1998
(51) Int. Cl.: G01L 23/22, G01M 15/00, F02P 17/12, F02P 5/152

(54) **Verfahren zur Erkennung von klopfender Verbrennung aus einem Ionenstromsignal bei Brennkraftmaschinen**

(30) Priorität: 12.12.1997 DE 19755255
(71) Anmelder: TEMIC TELEFUNKEN microelectronic GmbH, 74072 Heilbronn (DE); DaimlerChrysler AG, 70567 Stuttgart (DE)
(72) Erfinder: Wilstermann, Hartung, 74405 Gaildorf (DE); Hohner, Peter, 70771 Echterdingen (DE); Bertelshofer, Peter, 90513 Zirndorf (DE)
(74) Vertreter: Kolb, Georg

(57) **Zusammenfassung**

Bei bisherigen Verfahren wird das Ionenstromsignal mittels einer unteren Klopfschwelle bewertet. Da jedoch der für die Klopferkennung signifikante Zeitbereich des Ionenstromsignals relativ klein ist und gleichzeitig insbesondere durch die bei der sich ausbreitenden Verbrennung auftretende Flammfront sehr starke Schwankungen des Ionestromsignals hervorrufen kann, die jedoch nicht auf klopfen zurückzuführen sind, muß eine Unterscheidung ermöglicht werden.

Diese wird erfindungsgemäß durch eine obere Klopfschwelle erreicht, mit der ein Integralwert des Ionenstromsignals verglichen wird und beim Überschreiten der oberen Klopfschwelle eine Verbrennung als nichtklopfend definiert wird. Die obere Klopfschwelle wird in Abhängigkeit vom aktuellen Betriebszustand nachgeführt, der vorzugsweise aus mehreren dem aktuellen Integralwert vorangegangenen Integralwerten ermittelt wird, die obere Klopfschwelle jedoch auf dem letzten Wert gehalten wird, solange eine klopfende Verbrennung erkannt wird.

Verwendung insbesondere für Brennkraftmaschinen mit Doppelzündung oder/und elektronischer Zündzeitpunktverstellung

## Beschreibung

Die Erfindung betrifft ein Verfahren zur Erkennung von klopfender Verbrennung aus einem Ionenstromsignal bei Brennkraftmaschinen gemäß dem Oberbegriff des Patentanspruches 1.

Die klopfende Verbrennung einer Brenkraftmaschine ist eine unkontrollierte Explosion des noch nicht verbrannten Gemischs im Zylinder und kann bei starken Klopfschlägen zur Schädigung des des Motors führen. Da jedoch gerade an der Klopfgrenze, also bei bereits leicht klopfender Verbrennung der Motor seine maximale Leistung freisetzt, ist es Ziel einer Motorsteuerung, diesen möglichst nahe an der Klopfgrenze zu betreiben. Tritt Klopfen auf, wird der Zündzeitpunkt langsam Wieder in Richtung des oberen Totpunktes des Kolbens verschoben. Klopfende Verbrennung ist durch Schwingungen (5 bis 20 kHz) im Bereich nach dem Zylinderdruckmaximum charakterisiert und mittels des Ionenstroms ermittelbar. Das Ionenstromsignal weist jedoch bereits ein erstes Maximum sowie Schwingungen des Ionenstroms bei der sich ausbreitenden Flammfront auf. Dieses kann die Klopferkennung verfälschen, da diese Schwingungen auf Turbulenzen im Zylinder, nicht jedoch auf Klopfen zurückzuführen sind.

Verschiedene Vorrichtungen und Verfahren zur Erkennung klopfender Verbrennung sind bspw. der DE 42 39 592 C2, der DE 21 782 C2, der DE 34 15 948 C2, der DE 30 27 103 sowie der GB 2 259 365 zu entnehmen.

Diese Verfahren nach dem Stand der Technik erweisen sich als besonders nachteilig, wenn besonders atypische Betriebszustände des Motors auftreten oder wenn sie bspw. bei Brennkraftmaschinen mit einer Mehrfachzündung während eines Verbrennungstaktes eingesetzt werden sollen. Fehler können auch bei der Verstellung des Zündzeitpunktes auftreten. In allen Fällen kann es zu einer Erfassung eines Teils der Flammfront im Meßbereich des Ionenstromsignals und daher zu sehr starken Unterschieden des Ionenstromssignals kommen. Wird nun eine Verbrennung, bei der die Flammfront bereits in das Zeitfenster der Ionenstrommessung hineinragt, als klopfend erkannt und eine Anti-Klopf-Steuerung, wie aus der DE 42 39 592 bekannt, aktiviert und der Zündzeitpunkt folglich in Richtung des oberen Totpunktes nach hinten verschoben, so ragt bei der darauf folgenden Verbrennung die Flammfront noch stärker in das Zeitfenster zur Ionenstrommessung hinein. Es kommt zu einer völligen Fehlreaktion der Zündzeitpunktsteuerung aufgrund der fehlerhaft erkannten klopfenden Verbrennung.

Aufgabe der Erfindung ist es daher, ein Verfahren zur zur Erkennung von klopfender Verbrennung aus einem Ionenstromsignal bei Brennkraftmaschinen anzugeben, welches technisch einfach realisierbar und störungssicher insbesondere gegen die oben beschriebenen Effekte ist.

Diese Aufgabe wurde durch die kennzeichnenden Merkmale des Anspruches 1 gelöst.

Dabei wird ausgenutzt, daß das Ionenstromsignal einer Flammfront auch in dem für das Klopfen entscheidenden Frequenzbereich eine gegenüber dem Klopfen deutlich höhere Amplitude hat. Durch einen Vergleich mit einer oberen Klopfschwelle kann daher ein Plausibilitätstest des erhaltenen Integralwerts des Ionenstromsignals durchgeführt. Integralwerte, die über der oberen Klopfschwelle liegen, werden als unplausibel verworfen und die Verbrennung als nicht klopfend oder als unverändert gegenüber dem zuvor ermittelten Verbrennungszustand definiert, auch wenn der Integralwert neben der oberen natürlich auch die darunter liegende, für das Klopfen signifikante untere Klopfschwelle überschritten wird. Die zwei Alternativen der Definierung des aktuellen Verbrennungszustandes ermöglichen das Verfahren an unterschiedliche nachgeordnete Zündzeitpunkt-Regelkreise anzupassen. Die unterschiede werden bei Überschreitung der oberen Klopfschwelle während des Klopfens deutlich. So kann bei Verfahren mit einer sehr schnellen und starken Anpassung des Zündzeitpunktes die Beibehaltung des zuvor ermittelten Verbrennungszustandes (Klopfen) gegenüber der Definierung als nicht klopfend eine zu frühzeitige fehlerhafte Veränderung des Zündzeitpunktes vermeiden. Bei kleinen Schritten der Veränderung des Zündzeitpunktes hingegen kann eine Definition als nicht klopfend durchaus ausreichend sein und fehlerfrei arbeiten. Dies muß jeweils im Einzelfall geprüft werden.

Da sich das Ionenstromsignal in Abhängigkeit vom Betriebszustand der Brennkraftmaschine, insbesondere der Drehzahl und Last, stark verändert, ist eine Nachführung der oberen Klopfschwelle in Abhängigkeit von einem den aktuellen Betriebszustand beschreibenen Parameter sehr vorteilhaft. Insbesondere erweist es sich äußerst vorteilhaft, die Klopfschwelle in Abhängigkeit von wenigstens einem, vorzugsweise mehreren vorangegangenen Integralwerten des Ionenstromsignals nachzuführen. Durch eine mit zunehmenden zeitlichen Abstand zum aktuellen Integralwert abnehmende Gewichtung mehrerer vorangegangener Integralwerte können langsame Veränderungen des Ionenstromsignals sehr gut berücksichtigt werden. Die obere Klopfschwelle ergibt sich somit aus einer Approximation oder digitalen Tiefpaßfilterung aus den vorangegangenen Integralwerten.

Von besonderem Vorteil ist die Weiterbildung gemäß Anspruch 5, wonach die obere Klopfschwelle jedoch auf dem letzten Wert gehalten wird, solange eine klopfende Verbrennung erkannt wird. Dadurch wird vermieden, daß auch die Integralwerte, bei denen das Klopfen erkannt wurde, im folgenden bei der Gewichtung berücksichtigt werden und die obere Klopfschwelle so weit nach oben verschieben, daß auch bisher deutlich über dem Klopfen liegende Störungen des Flammfrontsignals als Klopfen erkannt werden. Für die Gewichtung werden dann jeweils die letzten zulässigen Integralwerte angesetzt.

Besonders bevorzugt ist es, die obere Klopfschwelle über einen festen Faktor f an die untere Kopfschwelle zu koppeln, sofern auch diese in Abhängigkeit des Betriebszustandes nachgeführt wird. Dadurch kann eine Doppelberechnung äquivalenter Veränderungen vermieden und der Rechenaufwand für die Steuereinheit herabgesetzt werden.

die Erfindung wird nachfolgend anhand von Ausführungsbeispielen und Figuren näher erläutert.

Kurze Beschreibung der Figuren:
- Figur 1: Ionenstromsignal (Fig. 1a) und bandpaßgefiltertes Ionenstromsignal (Fig. 1b) eines Verbrennungstaktes mit klopffreier Verbrennung über die Zeit sowie zeitlicher Verlauf des Integralwertes (Fig. 1c) bei klopffreier Verbrennung
- Figur 2: Ionenstromsignal (Fig. 2a) und bandpaßgefiltertes Ionenstromsignal (Fig. 2b) eines Verbrennungstaktes mit klopfender Verbrennung über die Zeit sowie zeitlicher Verlauf des Integralwertes (Fig. 2c) bei klopfender Verbrennung
- Figur 3: Ionenstromsignal (Fig. 3a) und bandpaßgefiltertes Ionenstromsignal (Fig. 3b) eines Verbrennungstaktes mit atypischer, gestörter Verbrennung über die Zeit sowie zeitlicher Verlauf des Integralwertes (Fig. 2c) bei atypischer Verbrennung
- Figur 4: Anpassung der Schwellen in Abhängigkeit vom Betriebszustand der Brennkraftmaschine, Festhalten der vorherigen Schwellwerte bei klopfender Verbrennung
- Figur 5: Signal für klopfende Verbrennung

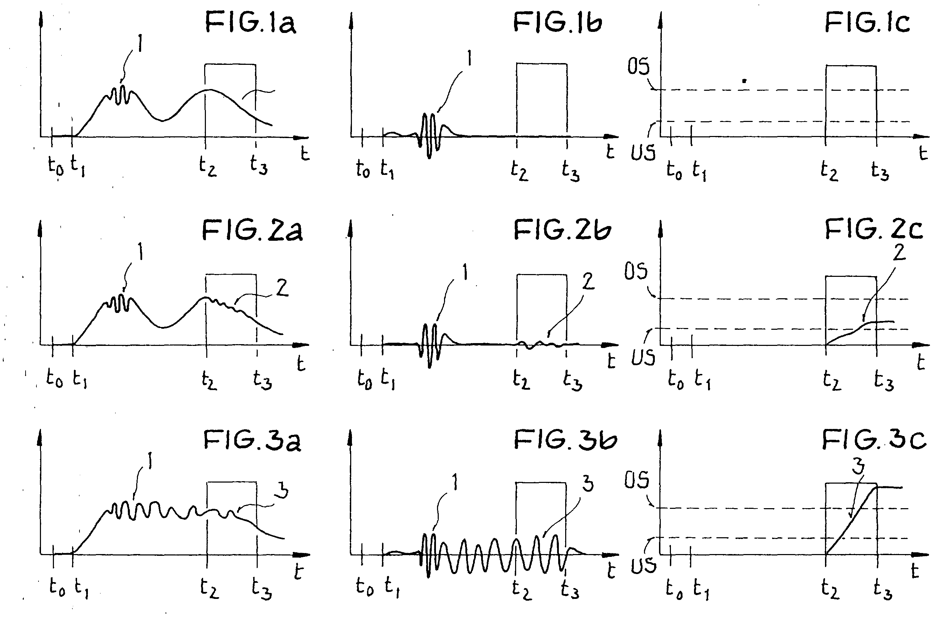

Die Figur 1 zeigt den Fall der klopffreien Verbrennung. So wird in figur 1a der Verlauf des Ionenstromsignals i gezeigt. Der zwischen dem Zündanfang t0 und dem Zündende t1 liegende Zündfunken wird nicht betrachtet. Das Ionenstromsignal i weist den sich daran immer anschließenden Flammfrontbereich 1 auf sowie ein weiteres Maximum der Ionisation beim Druckmaximum. Das Zeitfenster zur Klopferkennung beginnt zu t2 und endet in t3. Es erfaßt den für das Klopfen signifikanten Bereich des Ionenstromsignals. Wie aus Figur 2, dem bandpaßgefilterten Ionenstromsignal, besonders gut zu erkennen ist, tritt im relevanten Frequenzbereich bei klopffreier Verbrennung einzig eine Schwingung im Flammfrontsignalbereich 1 auf. Zwischen t2 und t3, also innerhalb des Zeitfensters ist die Amplitude weitgehend Null und der Integralwert ∫ i dt des bandpaß- und zeitfenstergefilterten Ionenstromsignals i somit Null, oder zumindest kleiner als die untere Klopfschwelle US (vgl. Fig. 1c).

Vergleicht man demgegenüber den in den Fig. 2 a-c dargestellten Fall der klopfenden Verbrennung, so wird die Abweichung im Klopfsingalbereich 2 deutlich. Während sich im Ionenstromsignal in Fig. 2a das Klopfen nur in Form einer auf das Ionenstromsignal aufgelagerten hochfreqenten Schwingung zeigt, kann durch Bandpaßfilterung im relevanten Frequenzbereich die Klopfschwingung noch besser erkannt werden. So weist das bandpaßgefilterte Ionenstromsignal nun neben dem Flammfrontsignalbereich 1 auch den Klopfsignalbereich 2 mit einer deutlich erkennbaren Amplitude innerhalb des Zeitfensters von t2 bis t3 auf. Der Integralwert ∫ i dt des bandpaß- und zeitfenstergefilterten Ionenstromsignals i steigt somit während des Zeitfensters von t2 bis t3 auf einen Wert größer der Klopfschwelle US an. Die obere Klopfschwelle OS wird jedoch von diesem, auf Klopfen beruhenden Schwingung nicht überschritten. Die Dimensionierung der oberen und unteren Klopfschwellen in Abhängigkeit vom Betriebszustand der Brennkraftmaschine wird spätr beschrieben.

In Figur 3 soll nun im Vergleich zu den Fig. 1 und 2 auch noch der Fall einer atypischen, gestörten Verbrennung gezeigt werden. Bspw. können gerade bei Doppelzündungen derartige Ionenstromsignale beobachtet werden. Jedoch auch eine ungünstige Lage des Zeitfensters kann dazu führen, daß Einflüsse des Flammfrontsignalbereichs 1 in das Meßfenster ragen und so den Integralwert atypisch hoch ansteigen lassen. Das bisher zwischen dem Flammfrontbereich 1 und dem Klopfsignalbereich beobachtbare Absinken der Amplitude kann ganz oder teilweise verschwinden und die Schwingungen sich bis ins Zeitfenster zwischen t2 und t3 auf hoher Amplitude fortsetzen. Das bandpaßgefilterte Ionenstromsignal in Fig. 3b zeigt im Vergleich zu den Fig. 1b und 2b den atypischen Verlauf besonders deutlich. Diese Auswirkung des Flammfrontsignals mit hoher Amplitude erlaubt eine Unterscheidung, denn sie führt zu einem unverhältnismäßig schnellen und hohen Anstieg des Integralwertes ∫ i dt innerhalb des Zeitfensters (vgl. Fig. 3c) und zur Überschreitung der unteren und oberen Klopfschwelle. Während nach dem Stand der Technik eine solche Verbrennung als klopfend erkannt wurde, da der Integralwert ∫ i dt über der unteren Klopfschwelle US liegt, kann nun mittels der oberen Klopfschwelle OS eine derart unplausible interpretation vermieden werden. Der Integralwert ∫ i dt übersteigt auch die obere Klopfschwelle OS, so daß der Integralwert als unplausibel erkannt wird. Die Verbrennung wird als nicht klopfend definiert und die Messung wiederholt.

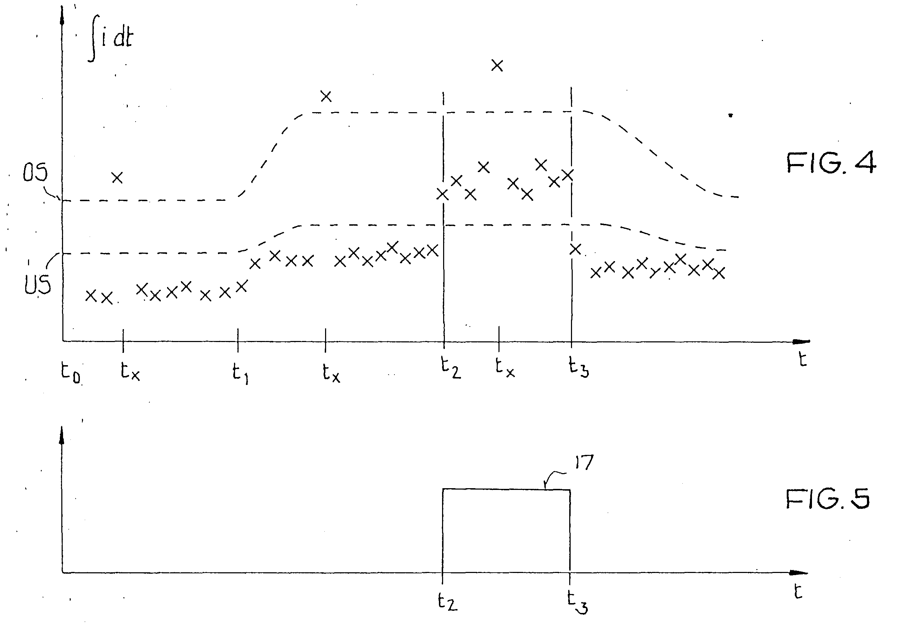

Figur 4 zeigt die Anpassung der Schwellen in Abhängigkeit vom Betriebszustand der Brennkraftmaschine über mehrere Verbrennungstakte hinweg, wobei die Vorgänge zeitlich gerafft dargestellt wurden. Betrachtet man zunächst die Verbrennungstakte tx, bei denen jeweils ein Integralwert ermittelt wurde, der über der oberen Klopfschwelle OS liegt, so ist anhand des Klopfanzeigesignals 17 in Figur 5 dazu erkennbar, daß diese als unplausibel erkannt wird. Die obere wie auch die untere Klopfschwelle werden in diesem Ausführungsbeispiel diesen unplausiblen Werten nicht nachgeführt. Ein während des Klopfens zwischen t2 und t3 erkannter unplausibler Integralwert wird in diesem Beispiel als weiterhin klopfend gewertet (Signal 17, vgl. Fig. 5). Eine Definition als nicht klopfend würde zu einem Aussetzer zum Zeitpunkt tx zwischen t2 und t3 führen, was bei Zündzeitpunktsteuerungen mit kleiner Regelanpassung jedoch ohne Nachteile ebenso wie die Beibehaltung des zuvor ermittelten Verbrennungszustandes, in diesem Fall 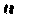 Klopfen", wäre.

Betrachtet man den Anstieg des Grundsignals der Integralwerte zum Zeitpunkt t1, so wird anhand des Verlaufs der unteren und oberen Kopfschwelle (US, OS) deutlich, daß diese dem angestiegenden Integralwerten folgen. In diesem Ausfürhungsbeispiel ist die obere Klopfschwelle OS über einen multiplikativen Faktor f an die untere Klopfschwelle US gebunden, so daß sich die Änderung der unter um diesen Faktor f verstärkt auf die obere Klopfschwelle OS auswirkt. Analog dazu kann die Rückführung der Klopfschwellen bei einer Absenkung der Integralwerte zum Zeitpunkt t3 beobachtet werden. Außerdem ist im Zeitbereich zwischen t2 und t3,wie auch in Fig. 5 deutlich gemacht wird, eine klopfende Verbrennung zu erkennen, da die Integralwerte zwischen unterer und oberer Klopfschwelle (US < ∫ i dt < OS) liegt. Hier wird das Festhalten der vorherigen Schwellwerte bei klopfender Verbrennung deutlich. Während ansonsten aufgrund der Gewichtsfunktion über die vorherigen Integralwerte es zu einem Anstieg der Klopfschwellen kommen würde, werden diese Integralwerte des Klopfens als auch die unplausiblen Integralwerte nicht berücksichtigt, da anderenfalls sich bei einer größeren Anzahl von Integralwerten im klopfenden Bereich die Klopfschwellen sich diesen anpassen würden und eventuell aus dem realen Klopfbereich herausdriften.

## Patentansprüche

1. Verfahren zur Erkennung von klopfender Verbrennung bei mittels eines Zündfunkens zu einem Zündzeitpunkt zu zündenden Gasgemischs bei Brennkraftmaschinen, bei dem ein Ionenstrom im Brennraum erfaßt, das Ionenstromsignal über ein Zeitfenster erfaßt und bandpaßgefiltert und das bandpaßgefilterte Signal zu einem aktuellen Integralwert integriert wird, der aktuelle Integralwert mit einer unteren Klopfschwelle verglichen und bei einem aktuellen Integralwert, der größer als die untere Klopfschwelle ist, eine klopfende Verbrennung erkannt wird, **dadurch gekennzeichnet, daß** eine obere Klopfschwelle vorgesehen ist, die größer als die untere Klopfschwelle ist und, falls der aktuelle Integralwert die obere Klopfschwelle überschreitet, die Verbrennung
a) immer als nicht klopfend oder
b) als unverändert gegenüber dem zuvor ermittelten Verbrennungszustand definiert wird.

2. Verfahren nach Anspruch 1, **dadurch gekennzeichnet, daß** die obere Klopfschwelle in Abhängigkeit von wenigstens einem den aktuellen Betriebszustand der Brennkraftmaschine beschreibenden Parameter verändert wird.

3. Verfahren nach Anspruch 2, **dadurch gekennzeichnet, daß** die obere Klopfschwelle in Abhängigkeit von wenigstens einem dem aktuellen integralwert vorangegangenen Integralwert nachgeführt wird.

4. Verfahren nach Anspruch 3, **dadurch gekennzeichnet, daß** die obere Klopfschwelle für einen aktuellen Integralwert in Abhängigkeit von mehreren vorangegangenen Integralwerten nachgeführt wird, die mit zunehmendem zeitlichen Abstand zum aktuellen Integralwert abfallend gewichtet werden.

5. Verfahren nach Anspruch 4, **dadurch gekennzeichnet, daß** die obere Klopfschwelle dann auf dem unmittelbar vorherigen Klopfschwellenwert gehalten wird, solange eine klopfende Verbrennung oder ein die obere Klopfschwelle übersteigender Integralwert erkannt wird.

6. Verfahren nach einem der vorangehenden Ansprüche, **dadurch gekennzeichnet, daß** die obere Kopfschwelle sich als ein Faktor f (f>1) aus der unteren Klopfschwelle ergibt, sofern die untere Klopfschwelle bereits in Abhängigkeit von von wenigstens einem den aktuellen Betriebszustand der Brennkraftmaschine beschreibenden Parameter verändert wird.
